# FASCICULE DE BREVET EUROPEEN

(11) **EP 1 494 052 B1**
(45) Date de publication et mention de la délivrance du brevet: **02.11.2005**
(21) Numéro de dépôt: 04291659.3
(22) Date de dépôt: 30.06.2004
(51) Int. Cl.: G02B 7/182, G02B 23/16

(54) **Télescope à très haute résolution**
Sehr hoch auflösendes Teleskop
High resolution telescope

(30) Priorité: 04.07.2003 FR 0308165
(43) Date de publication de la demande: 05.01.2005
(73) Titulaire: ALCATEL, 75008 Paris (FR)
(72) Inventeur: Delclaud, Yves, 83440 Callian (FR); Devilliers, Christophe, 06580 Pegomas (FR)
(74) Mandataire: Smith, Bradford Lee

(56) Documents cités:
- FR-A- 2 503 387
- FR-A- 2 764 082
- FR-A- 2 770 308
- US-A- 5 138 484
- US-A- 5 631 770

## Description

La présente invention se rapporte aux télescopes à très haute résolution, notamment à ceux utilisés pour l'observation terrestre à partir des satellites artificiels.

On utilise couramment pour observer la terre à partir des satellites artificiels des télescopes qui permettent d'obtenir des photographies détaillées. Le niveau de détail actuellement souhaité pour des satellites en orbite à une altitude relativement basse de l'ordre de 500 km par exemple nécessite une très haute résolution, de l'ordre de 2 mrd en mesure angulaire.

Pour obtenir de telles performances, il faut utiliser des télescopes de grand diamètre, au moins 300 mm, dont la stabilité mécanique des éléments, en particulier le positionnement des différents miroirs, doit être très importante, au pire quelques micromètres.

Pour obtenir une telle stabilité, on a besoin d'effectuer un découplage mécanique du télescope par rapport au satellite ou au support sur lequel il est monté, ainsi qu'un découplage interne au télescope.

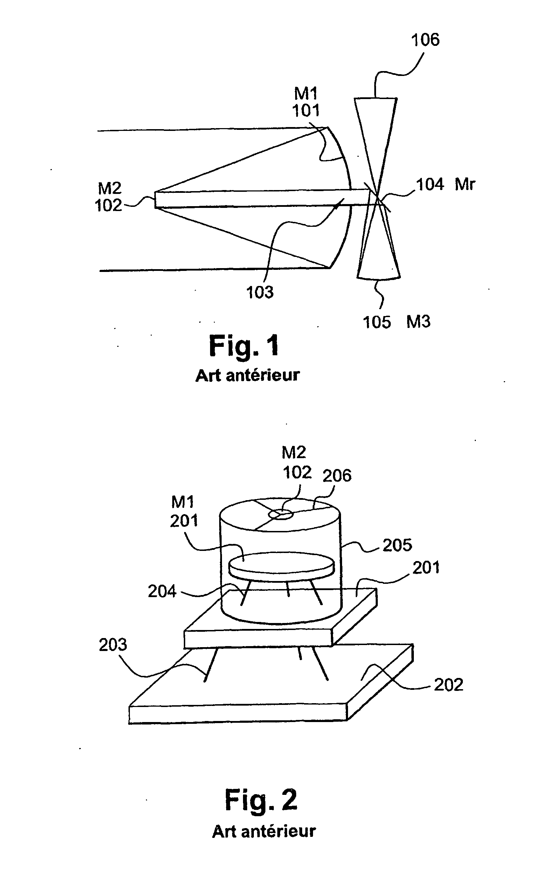

La combinaison optique généralement utilisée sur un tel télescope est du type KORSCH replié, comme représenté sur la figure 1. Le faisceau optique recueilli sur un miroir principal collecteur M1 101 est renvoyé par ce miroir 101 vers un miroir secondaire M2 102 de petite taille. Il traverse le miroir 101 par une ouverture centrale 103 pour être renvoyé à 90 degrés par un miroir de renvoi 104. Le faisceau optique ainsi dévié à 90 degrés est alors repris par d'autres dispositifs optiques adaptés aux utilisations souhaitées. Dans l'exemple représenté sur la figure, il est repris par un troisième miroir de concentration M3 105 qui le renvoie sur un dispositif de plan focal 106, une plaque photographique par exemple, à travers le miroir 104 qui est alors semi-transparent.

Une telle combinaison repliée permet d'obtenir une longue focale avec un faible encombrement. En contrepartie elle présente l'inconvénient d'avoir une très forte sensibilité, pour les performances de l'image finale, à la stabilité angulaire du miroir principal M1 et à la stabilité sur la distance entre les miroirs M1 et M2.

Pour obtenir la stabilité souhaitée, on utilise actuellement une structure telle que représenté sur la figure 2.

Dans une telle réalisation, le télescope comprend une structure principale 201 qui est fixée sur la plate-forme 202, ou structure d'utilisation, de support du télescope par l'intermédiaire de plusieurs (généralement 3 ou 4) dispositifs de fixation 203 dont la forme permet d'obtenir à la fois un filtrage et un découplage par rapport aux déformations de la plate-forme 202. À l'intérieur du télescope, la structure principale supporte l'ensemble des éléments optiques en assurant un deuxième niveau de filtrage et de découplage par rapport aux déformations. Ce deuxième niveau de filtrage est obtenu en particulier par des dispositifs de fixation 204 qui relient le miroir M1 à la structure principale 201. Le miroir M2 est relié à la structure principale, dans l'exemple de réalisation représenté sur la figure, par un tube 205 et des bras 206.

Cette structure qui comporte deux étages de filtrage/découplage est réalisée avec un ensemble de pièces complexes et coûteuses. L'assemblage de ces pièces et lui-même long et compliqué, ce qui augmente encore le coût total de réalisation de l'ensemble.

Les documents FR 2764082 et US 5,138,484 montrent des téléscopes à miroirs primaire et secondaire et fixés sur des structures monolithiques.

Pour simplifier la réalisation d'un tel télescope, et diminuer en conséquence son coût, l'invention propose un télescope à très haute résolution, tel que défini dans la revendication 1, du type comprenant un miroir principal M1, un miroir secondaire M2, un ensemble d'éléments optiques pour assurer au faisceau optique un trajet replié derrière le miroir principal, et des moyens de fixation pour assurer l'assemblage de ces organes et leur fixation sur la structure d'utilisation du télescope tout en exerçant un filtrage et un découplage par rapport aux déformations de cette structure, principalement caractérisé en ce qu'il comprend une structure de base monolithique dans laquelle est intégré le miroir principal M1 et sur laquelle sont fixés les dits éléments optiques et les dits moyens de fixation. De plus, la structure de base a sensiblement la forme d'un cylindre dont l'une des extrémités forme le miroir principal M1.

Selon une autre caractéristique, la structure de base est creuse et comporte un cloisonnage intérieur monolithique avec le reste de cette structure et permettant la fixation d'un miroir de renvoi Mr permettant d'obtenir ledit trajet replié du faisceau optique.

Selon une autre caractéristique, ledit cloisonnage intérieur comporte des ouvertures permettant le passage dudit faisceau optique replié à l'intérieur de la structure de base pour déboucher dans des ouvertures ménagées dans la face latérale de la structure de base.

Selon une autre caractéristique, le télescope comprend sur la face latérale de la structure de base trois dispositifs de fixation de miroir, dits DFM, fixés en leur milieu sur le télescope monolithique, permettant à la fois un découplage mécanique du côté des bras de fixation du miroir secondaire et du côté de la fixation de ces DFM avec la plate-forme d'utilisation du télescope.

Selon une autre caractéristique, le télescope comprend des supports dits filtrants d'éléments optiques à monter notamment miroir de renvoi et tertiaire, lesdits supports sont des supports filtrants comportant un découplage mécanique intrinsèque entre chaque élément à monter et la structure cylindrique, garantissant la performance en qualité image du miroir M1.

D'autres particularités et avantages de l'invention apparaîtront clairement dans la description suivante, faite en regard des figures annexées qui représentent :
- Le figure 1, un schéma de la combinaison optique d'un télescope dans le domaine de l'invention ;
- la figure 2, une vue en perspective cavalière et en transparence d'une réalisation d'un télescope connu;
- la figure 3, une vue en perspective cavalière de dessus de la structure de base monolithique d'un télescope selon l'invention ;
- la figure 4, une vue en perspective cavalière de dessous d'un télescope selon invention entièrement assemblé; et
- la figure 5, une représentation fonctionnelle de l'organe 414 de la figure 4.
- La figure 6, un schéma de la structure de base monolithique illustrant une interface pour le montage de miroir de renvoi et tertiaire.

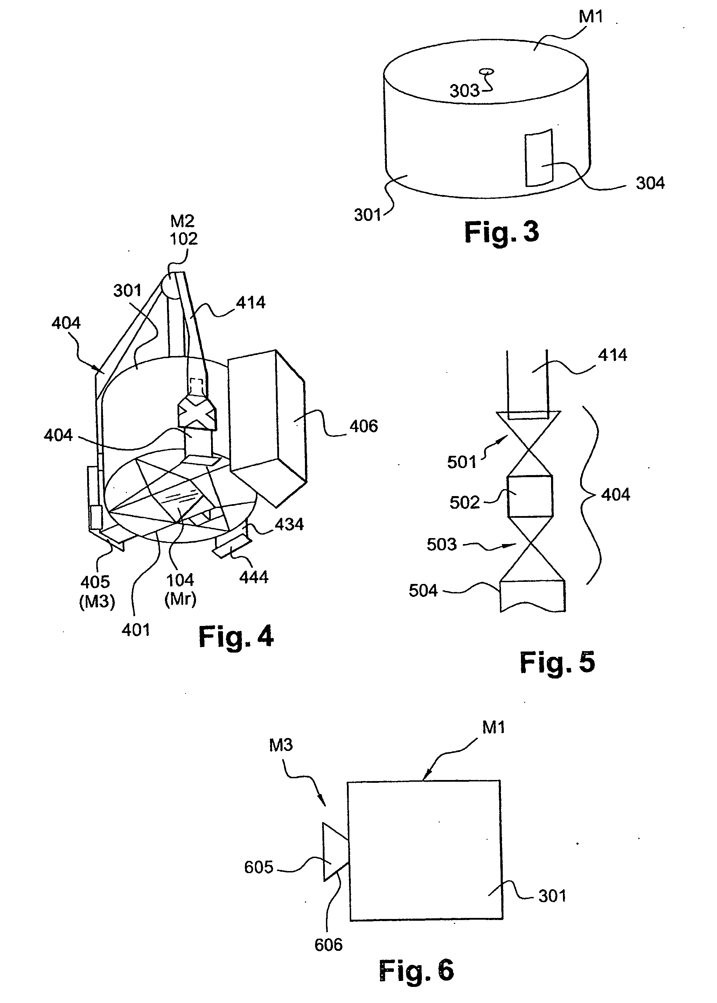

Selon l'invention, le télescope comprend, comme représenté sur la figure 3, une structure de base 301 entièrement monolithique dont une surface est polie pour former le miroir principal M1. Cette structure a la forme d'un cylindre dont l'extrémité supérieure forme le miroir M1.

Cette structure de base est réalisée par exemple en carbure de silicium du type Cesic ou SiC 100 selon des procédés connus qui permettent d'obtenir facilement des formes compliquées telles que par exemple le cloisonnage 401 de l'intérieur creux du corps 301, représenté sur la figure 4. Ce cloisonnage monolithique avec le corps permet d'obtenir une structure à la fois légère et rigide. Il permet également d'offrir des moyens de fixation pour le miroir de renvoi Mr 104 .

Les différentes ouvertures nécessaires au passage des faisceaux optiques, telles que par exemple l'ouverture centrale 303 du miroir M1, une ouverture 304 dans la face latérale du bloc monolithique 301 permettant le passage du faisceau lumineux vers le dispositif de plan focal ainsi qu'une autre ouverture non représentée sur la figure et faisant face à cette ouverture 304 pour permettre le passage du faisceau lumineux depuis et vers le troisième miroir de concentration, et les différentes ouvertures dans le cloisonnage intérieur 401, non représentées sur la figure, sont également obtenues par le même procédé de fabrication.

La structure monolithique 301 étant ainsi réalisée, on procédera alors au polissage de sa face supérieure pour fabriquer le miroir M1.

On assemblera ensuite le miroir M2 avec la structure monolithique 301 définitive ainsi obtenue en utilisant trois dispositifs de fixation de miroir, connus sous l'appellation consacrée DFM, répartis régulièrement autour de la structure 301, comme représenté sur la figure 4. Ces dispositifs comprennent des DFM 404 proprement dits qui sont prolongés vers le haut par des bras 414 qui se rejoignent pour soutenir le miroir M2. Ces DFM sont fixés sur la face latérale du bloc 301 par des moyens connus tels que des vis par exemple. Il sont conçus pour découpler de manière mécanique vers le haut la fixation des bras 414, et vers le bas la partie de ces DFM qui est fixée sur la plate-forme sur laquelle le télescope sera utilisé.

La figure 5 représente de manière fonctionnelle l'un de ces DFM. On y retrouve une partie supérieure 501 qui forme découplage avec le bras 414 qui fait partie du tripode de fixation du miroir M2, une partie intermédiaire 502 qui permet l'interfaçage avec le bloc monolithique 301 comportant le miroir M1, une partie inférieure 503 qui forme découplage avec la partie 504 permettant l'interfaçage avec la plate-forme de support du télescope.

Ainsi donc l'ensemble des trois DFM forme un étage unique de filtrage/découplage pour l'ensemble du télescope et pour le miroir M2 par rapport au miroir M1.

En ce qui concerne le miroir dé renvoi Mr, celui-ci sera de préférence collé à sa place définitive puisqu'il fait partie de la structure optique fixe du télescope.

Le miroir M3 et le dispositif de plan focal seront fixées par des moyens connus, des vis par exemple, sur la face latérale du bloc 301 en regard des ouvertures, 304 en particulier, qui permettent le passage des faisceaux optiques qui arrivent sur ces deux organes.

Comme on peut le voir sur la figure 6, selon le besoin, il est possible de donner une forme spécifique à l'interface support 605 servant au montage des éléments optiques tels que miroir de renvoi, miroir tertiaire, du télescope sur le bloc monolithique 301 de manière à ce que cette interface assure de manière intrinsèque un découplage mécanique 606 pour éviter tout déformation du miroir M1 lors du serrage ou sous l'effet d'une déformation thermoélastique.

La figure 4 qui illustre comme on vient de le décrire le télescope complet comportant en particulier comme élément optique monté sur le bloc monolithique un miroir M3 405 et un dispositif de plan focal 406.

## Revendications

1. Télescope à très haute résolution, du type comprenant un miroir principal M1, un miroir secondaire M2, un ensemble d'éléments optiques (104-106) pour assurer au faisceau optique un trajet replié derrière le miroir principal, et des moyens de fixation pour assurer l'assemblage de ces organes et leur fixation sur la structure d'utilisation (202) du télescope tout en exerçant un filtrage et un découplage par rapport aux déformations de cette structure, **caractérisé en ce qu'**il comprend une structure de base (301) monolithique dans laquelle est intégré le miroir principal M1 et sur laquelle sont fixés les dits éléments optiques (104-106) et les dits moyens de fixation (404) et ce que la structure de base (301) a sensiblement la forme d'un cylindre dont l'une des extrémités forme le miroir principal M1.

2. Télescope selon la revendication 1, **caractérisé en ce que** la structure de base (301) est creuse et comporte un cloisonnage intérieur (401) monolithique avec le reste de cette structure et permettant la fixation d'un miroir de renvoi Mr (104) permettant d'obtenir ledit trajet replié du faisceau optique.

3. Télescope selon la revendication 2, **caractérisé en ce que** ledit cloisonnage intérieur (401) comporte des ouvertures permettant le passage dudit faisceau optique replié à l'intérieur de la structure de base (301) pour déboucher dans des ouvertures (304) ménagées dans la face latérale de la structure de base.

4. Télescope selon l'une quelconque des revendications 1 à 3, **caractérisé en ce qu'**il comprend sur la face latérale de la structure de base trois dispositifs de fixation de miroir (404), dits DFM, permettant à la fois un découplage mécanique du côté des bras (414) de fixation du miroir secondaire (102) et du côté de la fixation de ces DFM avec la plate-forme d'utilisation du télescope.

5. Télescope monolithique selon l'une quelconque des revendications précédentes comprenant des supports d'éléments à monter notamment miroir de renvoi et tertiaire, **caractérisé en ce que** ces supports sont des supports filtrants comportent un découplage mécanique intrinsèque entre chaque élément à monter et la structure cylindrique, garantissant la performance en qualité image du miroir M1.

## Patentansprüche

1. Sehr hoch auflösendes Teleskop des Typs mit einem Hauptspiegel M1, einem Sekundärspiegel M2, einem Satz optischer Elemente (104-106)zur Gewährleistung des gewinkelten Gangs des optischen Strahls hinter dem Hauptspiegel, und Befestigungsmitteln, um die Montage dieser Organe und ihre Befestigung an der Nutzungsstruktur (202) des Teleskops durchzuführen, und gleichzeitig eine Filterung und Entkopplung bezogen auf die Verzerrungen dieser Struktur auszuüben, **dadurch gekennzeichnet, dass** es eine monolithische Grundstruktur (301) beinhaltet, in welche der Hauptspiegel M1 integriert ist und an der die genannten optischen Elemente (104-106) und die bezeichneten Befestigungsmittel (404) befestigt werden, und dadurch, dass die Grundstruktur (301) etwa die Form eines Zylinders hat, dessen eines Ende den Hauptspiegel M1 bildet.

2. Teleskop gemäß Anspruch 1, **dadurch gekennzeichnet, dass** die Grundstruktur (301) hohl ist und eine monolithische Innenabtrennung (401) gegenüber dem Rest dieser Struktur enthält, und die Befestigung eines Umlenkspiegels Mr (104) ermöglicht, wodurch der gewinkelte Gang des optischen Strahls erzielt werden kann.

3. Teleskop gemäß Anspruch 2, **dadurch gekennzeichnet, dass** diese Innenabtrennung (401) Öffnungen beinhaltet, die den Durchtritt dieses gewinkelten optischen Strahls im Inneren der Grundstruktur (301) ermöglichen, um dann in Öffnungen (304) einzumünden, die sich in der Seitenfläche der Grundstruktur befinden.

4. Teleskop gemäß einem der Ansprüche 1 bis 3, **dadurch gekennzeichnet, dass** es an der Seitenfläche der Grundstruktur drei Spiegel befestigungs vorrichtungen (404), so genannte DFM beinhaltet, die gleichzeitig eine mechanische Entkopplung auf der Seite der Befestigungsarme (414) des Sekundärspiegels (102) und auf der Seite der Befestigung dieser DFM mit der Nutzungsplattform des Teleskops ermöglichen.

5. Monolithisches Teleskop gemäß einem der vorstehenden Ansprüche, das Träger für anzubringende Elemente, insbesondere Umlenk- und Tertiärspiegel beinhaltet, **dadurch gekennzeichnet, dass** diese Träger Filterträger sind, welche eine eigene mechanische Entkopplung zwischen jedem Element, das anzubringen ist, und der zylindrischen Struktur enthalten, wodurch die Leistung hinsichtlich der Bildqualität des Spiegels M1 gewährleistet wird.

## Claims

1. Very high resolution telescope, of the type comprising a main mirror M1, a secondary mirror M2, a set of optical elements (104-106) for providing a folded path behind the main mirror for a light beam, and fixing means for assembling these members and fixing them to a utilisation structure (202) of the telescope and filtering and decoupling deformations of that structure, which telescope is **characterised in that** it comprises a monolithic basic structure (301) into which the main mirror M1 is integrated and to which said optical elements (104-106) and said fixing means (404) are fixed and **in that** the basic structure (301) has substantially the shape of a cylinder whereof one end forms the main mirror M1.

2. Telescope according to claim 1, **characterised in that** the basic structure (301) is hollow and comprises interior compartmentation (401) that is monolithic with the remainder of the structure and enables the fixing of a deflector mirror Mr (104) for obtaining said folded path for the light beam.

3. Telescope according to claim 2, **characterised in that** said interior compartmentation (401) includes apertures allowing the passage of said folded light beam inside the basic structure (301) leading to apertures (304) formed in the lateral face of the basic structure.

4. Telescope according to any one of claims 1 to 3, **characterised in that** it comprises on the lateral face of the basic structure three mirror fixing devices (DFM) (404) for mechanically decoupling the arms (414) for fixing the secondary mirror (102) and the fixing of the DFM to the utilisation platform of the telescope.

5. Monolithic telescope according to any one of the preceding claims comprising supports for elements to be assembled, in particular a deflector tertiary mirror, **characterised in that** the supports are filtering supports that provide intrinsic mechanical decoupling between each element to be mounted and the cylindrical structure, guaranteeing the performance of the mirror M1 in terms of image quality.
